# EUROPEAN PATENT APPLICATION

(11) **EP 3 974 740 A1**
(43) Date of publication of application: **30.03.2022**
(21) Application number: 21165320.9
(22) Date of filing: 26.03.2021
(51) Int. Cl.: F24F 13/02, F16L 59/12

(54) **FRESH AIR PIPE, FRESH AIR MODULE AND AIR CONDITIONER**

(30) Priority: 29.09.2020 CN 202011056442; 29.09.2020 CN 202022198436 U
(71) Applicant: GD Midea Air-Conditioning Equipment Co., Ltd., Foshan, Guangdong 528311 (CN); Midea Group Co., Ltd., Foshan, Guangdong 528311 (CN)
(72) Inventor: ZHAO, Zisheng, Foshan, Guangdong 528311 (CN); YOU, Bin, Foshan, Guangdong 528311 (CN); MA, Lie, Foshan, Guangdong 528311 (CN); HUANG, Junhao, Foshan, Guangdong 528311 (CN); ZHAI, Fuxing, Foshan, Guangdong 528311 (CN); ZHOU, Heije, Foshan, Guangdong 528311 (CN); LIN, Jianhui, Foshan, Guangdong 528311 (CN); LIN, Yongqiang, Foshan, Guangdong 528311 (CN)
(74) Representative: RGTH

(57) **Abstract**

Disclosed are a fresh air pipe, a fresh air module, and an air conditioner. The fresh air pipe includes a thermal insulation pipe body, and a structure of the thermal insulation pipe body is reinforced. In this way, condensation can be prevented.

## Description

### TECHNICAL FIELD

The present disclosure relates to the technical field of air conditioning adjustment, in particular to a fresh air pipe, a fresh air module and an air conditioner.

### BACKGROUND

In the related art, in order to meet user's requirements for air quality, air conditioners (such as indoor air conditioners, all-in-one air conditioners, or fresh air fans, etc.) are provided with a fresh air function to guide outdoor air into the room, that is, to introduce fresh outdoor air into the room.

Specially, the air conditioner has a fresh air duct. A fresh air pipe is connected to an air inlet of the fresh air duct to communicate with the outdoor environment through the fresh air pipe. The air conditioner is usually installed indoors, so the fresh air pipe usually extends to the outdoors through a wall hole. However, the size of the wall hole is usually small, which will result in a smaller diameter of the fresh air pipe, and limiting the intake of fresh air, especially when the fresh air pipe and the refrigerant connection pipe of the air conditioner are installed in the same wall hole, the diameter of the fresh air pipe will be reduced.

However, in the related art, the fresh air pipe is made of plastic material. Due to the temperature difference between indoor and outdoor environments, condensation is easily to form on the fresh air pipe.

### SUMMARY

The main objective of the present disclosure is to provide a fresh air pipe, which aims to solve the technical problem that condensation is easily formed on the fresh air pipe of an air conditioner in the related art.

In order to achieve the above objective, the present disclosure provides a fresh air pipe for an air conditioner. The fresh air pipe includes a thermal insulation pipe body, and a structure of the thermal insulation pipe body is reinforced.

In an embodiment, the fresh air pipe further includes a supporting structure provided on a pipe wall of the thermal insulation pipe body for supporting the thermal insulation pipe body.

In an embodiment, the supporting structure includes a supporting framework.

In an embodiment, the supporting framework is at least partially provided in the pipe wall of the thermal insulation pipe body.

In an embodiment, the supporting framework is provided between an inner wall surface and an outer wall surface of the thermal insulation pipe body; or the supporting framework protrudes from the inner wall surface of the thermal insulation pipe body on an inside of the thermal insulation pipe body; or the supporting framework protrudes from the outer wall surface of the thermal insulation pipe body on an outside of the thermal insulation pipe body.

In an embodiment, a thickness of the pipe wall of the thermal insulation pipe body is greater than or equal to 3 mm and less than or equal to 8 mm.

In an embodiment, the supporting framework is supporting on the inside of the thermal insulation pipe body, or the supporting framework is supporting on the outside of the thermal insulation pipe body.

In an embodiment, the supporting framework is fixedly connected to the inner wall surface of the thermal insulation pipe body, or the supporting framework is fixedly connected to the outer wall surface of the thermal insulation pipe body.

In an embodiment, the supporting structure further includes an inner protective cover provided on the inside of the thermal insulation pipe body, and the supporting framework is supporting on an inside of the inner protective cover, or the supporting framework is at least partially provided in a cover of the inner protective cover.

In an embodiment, the supporting structure further includes an outer protective cover provided on the outside of the thermal insulation pipe body.

In an embodiment, the supporting structure further includes an outer protective cover provided on the outside of the thermal insulation pipe body, and the supporting framework is supporting on an outside of the outer protective cover, or the supporting framework is at least partially provided in the outer protective cover.

In an embodiment, the supporting structure further includes an inner protective cover provided on the inside of the thermal insulation pipe body.

In an embodiment, the thermal insulation pipe body is an integrated pipe body extending along a length direction of the thermal insulation pipe body; or the thermal insulation pipe body includes a plurality of sub-pipe bodies sequentially provided in the length direction of the thermal insulation pipe body.

In an embodiment, the supporting structure further includes an inner protective cover provided on the inside of the thermal insulation pipe body and provided on an inside of the supporting framework; and/or the supporting framework further includes an outer protective cover provided on the outside of the thermal insulation pipe body and provided on an outside of the supporting framework.

In an embodiment, the inner protective cover is corrugated tubular; and/or the outer protective cover is corrugated tubular.

In an embodiment, the inner protective cover is a plastic member; and/or the outer protective cover is a plastic member.

In an embodiment, the inner protective cover includes PVC cover or TPU cover; and/or the outer protective cover includes PVC cover or TPU cover.

In an embodiment, a thickness of the inner protective cover is less than or equal to 5 mm; and/or a thickness of the outer protective cover is less than or equal to 5 mm.

In an embodiment, the supporting framework is a supporting frame.

In an embodiment, the supporting frame includes a plurality of axial supporting ribs extending in the length direction of the thermal insulation pipe body, and the plurality of axial supporting ribs are spaced apart from each other in a circumferential direction of the thermal insulation pipe body.

In an embodiment, the supporting frame further includes a circumferential connecting rib connected to the plurality of the axial supporting ribs.

In an embodiment, the supporting framework is a net-like structure or a grid-like structure.

In an embodiment, the supporting frame includes spiral supporting ribs spirally extending in the length direction of the thermal insulation pipe body.

In an embodiment, the supporting framework is a plastic member or a metal member; and/or the fresh air pipe further includes a fresh air connector, one end of the thermal insulation pipe body is connected to the fresh air connector, and the fresh air connector is configured to connect with a fresh air interface of the air conditioner; and/or the fresh air pipe is provided with multiple sections, and two adjacent sections of fresh air pipe are connected through a connecting pipe body.

In an embodiment, the supporting structure includes: an inner protective cover provided on an inside of the thermal insulation pipe body; and/or an outer protective cover provided on an outside of the thermal insulation pipe body.

In an embodiment, the thermal insulation pipe body is made of a thermal insulation material with a strength greater than 0.003 MPa.

In an embodiment, the fresh air pipe further includes an anti-rodent member provided in an air inlet of the thermal insulation pipe body or provided in the thermal insulation pipe body.

In an embodiment, the anti-rodent member is an anti-rodent spring or an anti-rodent net; and/or the anti-rodent member is integrated with the supporting frame of the supporting structure.

In an embodiment, the thermal insulation pipe body is made of polyethylene foam thermal insulation material, or polyurethane foam thermal insulation material, or phenolic foam thermal insulation material, or polystyrene board, or polystyrene foam thermal insulation material, or extruded polystyrene thermal insulation board, or ceramic fiber blanket, or aluminum silicate felt, or alumina, or silicon carbide fiber, or aerogel felt, or glass wool, or rock wool, or expanded perlite, or micro-nano heat insulation, or foamed cement.

The present disclosure further provides a fresh air module including the fresh air pipe described above.

The present disclosure further provides an air conditioner including the fresh air pipe described above; or including the fresh air module described above.

In the present disclosure, a thermal insulation pipe body is used to form a fresh air pipe, which can isolate the temperature transmission between the inside and outside of the fresh air pipe, thereby preventing the condensation problem caused by the temperature difference in the fresh air pipe.

Besides, in the present disclosure, by directly strengthening the structure of the thermal insulation pipe body, the plastic inner pipe can be eliminated or the thickness of the plastic inner pipe can be reduced. Thus, the fresh air pipe can have a higher structural strength, and an inner diameter of the fresh air pipe can be (substantially) increased under the condition that an outer diameter of the fresh air pipe remains unchanged to increase the fresh air volume.

### BRIEF DESCRIPTION OF THE DRAWINGS

In order to more clearly illustrate the embodiments of the present disclosure, drawings used in the embodiments will be briefly described below. Obviously, the drawings in the following description are only some embodiments of the present disclosure. It will be apparent to those skilled in the art that other figures can be obtained according to the structures shown in the drawings without creative work.
FIG. 1 is a schematic structural diagram of an air conditioner according to an embodiment of the present disclosure.
FIG. 2 is a schematic structural diagram of a fresh air module installed with a fresh air pipe in FIG. 1 from a perspective.
FIG. 3 is a schematic structural diagram of the fresh air module in FIG. 2 from another perspective; where a right end of a pipe wall of the fresh air pipe is peeled off a layer to expose a supporting framework.
FIG. 4 is a partial schematic diagram of the right end of the fresh air pipe in FIG. 3.
FIG. 5 is an exploded schematic diagram of the fresh air pipe in FIG. 3.
FIG. 6 is a schematic cross-sectional view of the fresh air pipe in FIG. 5.
FIG. 7 is a partial schematic diagram of the right end of the fresh air pipe in FIG. 6.
FIG. 8 is a schematic structural diagram of the fresh air module installed with a fresh air pipe according to another embodiment of the present disclosure; where a right end of a pipe wall of the fresh air pipe is peeled off a layer to expose a supporting framework.
FIG. 9 is a partial schematic diagram of the right end of the fresh air pipe in FIG. 8.
FIG. 10 is a schematic cross-sectional view of the fresh air pipe in FIG. 8.
FIG. 11 is a schematic structural diagram of the fresh air module installed with a fresh air pipe according to still another embodiment of the present disclosure.
FIG. 12 is an exploded schematic diagram of the fresh air module in FIG. 11.
FIG. 13 is an exploded schematic diagram of a multi-section fresh air pipe in FIG. 12.
FIG. 14 is a schematic structural diagram of the fresh air pipe in FIG. 12.
FIG. 15 is a schematic structural diagram of the fresh air pipe according to a fifth embodiment of the present disclosure.
FIG. 16 is a schematic structural diagram of the fresh air pipe according to a seventh embodiment of the present disclosure.
FIG. 17 is a schematic structural diagram of the fresh air pipe according to an eighth embodiment of the present disclosure.
FIG. 18 is a schematic structural diagram of the fresh air pipe according to a ninth embodiment of the present disclosure.
FIG. 19 is a schematic structural diagram of the fresh air pipe according to a tenth embodiment of the present disclosure.
FIG. 20 is a schematic structural diagram of the fresh air pipe according to an eleventh embodiment of the present disclosure.
FIG. 21 is a schematic cross-sectional view of the fresh air pipe in FIG. 20.

### Description of reference signs

| reference sign | name | reference sign | name |
|---|---|---|---|
| 100 | fresh air pipe | 25 | outer protective cover |
| 10 | thermal insulation pipe body | 30 | fresh air connector |
| 11 | sub-pipe body | 40 | anti-rodent member |
| 20 | supporting framework | 50 | connecting pipe body |
| 21 | spiral supporting rib | 1000 | air conditioner |
| 22 | axial supporting rib | 200 | fresh air interface |
| 23 | circumferential connecting rib | 300 | housing |
| 24 | inner protective cover | 400 | fresh air module |

The realization of the objective, functional characteristics, and advantages of the present disclosure are further described with reference to the accompanying drawings.

### DETAILED DESCRIPTION OF THE EMBODIMENTS

The technical solutions of the embodiments of the present disclosure will be described in more detail below with reference to the accompanying drawings. It is obvious that the embodiments to be described are only some rather than all of the embodiments of the present disclosure. All other embodiments obtained by persons skilled in the art based on the embodiments of the present disclosure without creative efforts shall fall within the scope of the present disclosure.

It should be noted that, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature.

Besides, the meaning of "and/or" appearing in the disclosure includes three solutions. For example, "A and/or B" includes only A solution, or only B solution, or both A and B solutions.

The present disclosure provides a fresh air pipe and an air conditioner, and the fresh air pipe is for the air conditioner. The air conditioner may be a split-type with fresh air function (including an air conditioner indoor unit (such as wall-mounted air conditioner indoor unit, or floor-standing air conditioner indoor unit, etc.) and air conditioner outdoor unit), an all-in-one type (such as a window air conditioner or a mobile air conditioner, etc.), or a fresh air fan, etc.. In the following embodiments of the present disclosure, a wall-mounted air conditioner indoor unit of a split-type air conditioner is taken as an example for description.

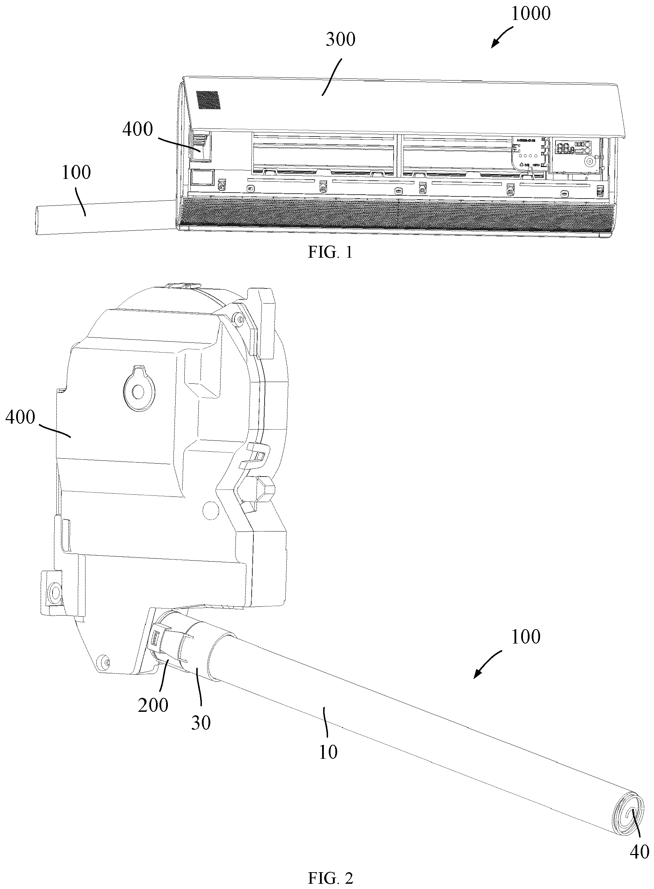

In an embodiment, as shown in FIG. 1 to FIG. 3, an air conditioner 1000 has a fresh air duct (it can be understood that if the air conditioner 1000 is a split-type air conditioner, an indoor unit of the air conditioner has a fresh air duct). A fresh air pipe 100 is connected to an air inlet of the fresh air duct for introducing outdoor fresh air into the fresh air duct for indoor delivery.

A fresh air interface 200 is provided at the air inlet of the fresh air duct, and the fresh air pipe 100 is connected to the fresh air interface 200.

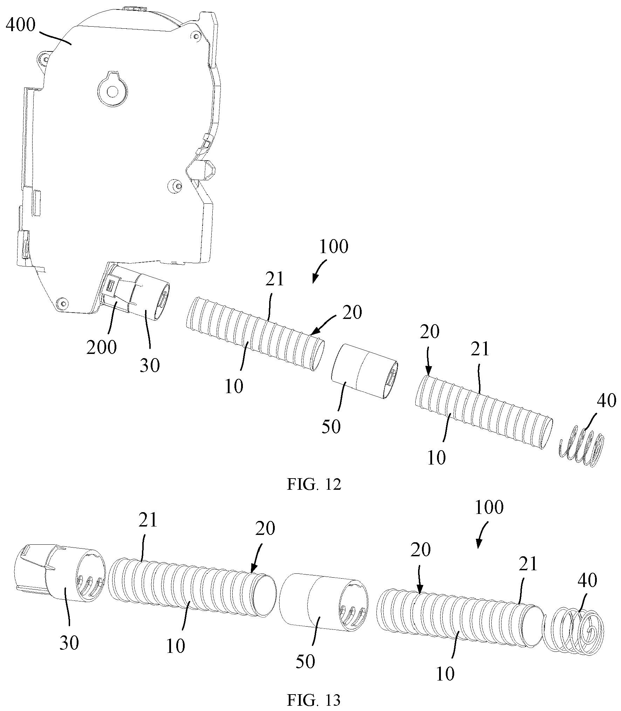

Specially, as shown in FIGs. 1-3, 8, 11 and 12, the indoor unit of the air conditioner 1000 includes a housing 300 and a fresh air module 400 provided in the housing 300 and having a fresh air duct. The fresh air interface 200 is provided on the fresh air module 400. In an embodiment, as shown in FIGs. 1-3, 8, 11 and 12, the fresh air module 400 includes a fresh air housing 300 having a fresh air duct and a fresh air rotor provided in the fresh air duct. The fresh air interface 200 is provided on the fresh air housing 300.

In other embodiments, it is also possible to form the fresh air duct directly in the housing 300 of the air conditioner indoor unit, that is, without a separated fresh air module 400, the fresh air interface 200 is directly provided in the housing 300 of the air conditioner indoor unit.

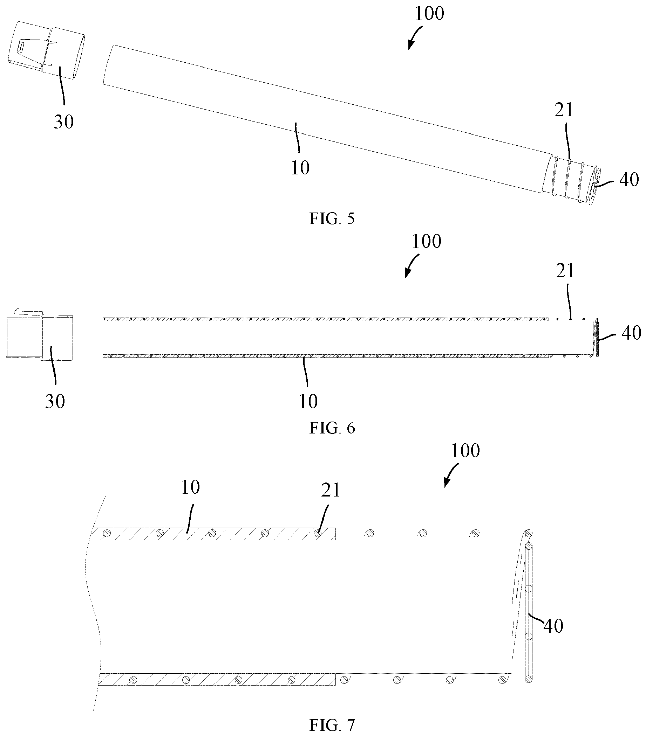

In an embodiment of the present disclosure, as shown in FIGs. 2 to 16, the fresh air pipe 100 includes a thermal insulation pipe body 10 with an enhanced structure.

As such, the thermal insulation pipe body 10 is used to form the fresh air pipe 100, which can isolate the temperature transmission inside and outside the fresh air pipe 100, thereby preventing the fresh air pipe 100 from causing condensation problems due to temperature differences. Moreover, by strengthening the structure of the thermal insulation pipe body 10, the fresh air pipe 100 can have a higher structural strength, thereby enhancing the wear resistance of the fresh air pipe 100. Thus, the fresh air pipe 100 can be prevented from being deformed or even damaged during installation or use.

It should be particularly pointed out that, in the present disclosure, the thermal insulation pipe body 10 with structural reinforcement is used to form the fresh air pipe 100. An inner diameter of the fresh air pipe 100 can be (significantly) increased under the condition that an outer diameter of the fresh air pipe 100 remains unchanged, so that a cross-sectional area of the fresh air pipe 100 passing air can be (significantly) increased. Thereby, the fresh air volume can be increased to meet the user's demand for fresh air volume; and a utilization rate of the wall hole can be improved.

In order to intuitively embody the advantages of the fresh air pipe 100 of the present disclosure, the present disclosure further provides a structure of the fresh air pipe 100 in the related art. In the related art, the fresh air pipe 100 includes a plastic inner pipe and a thermal insulation outer pipe sheathed outside the plastic inner pipe. The thermal insulation outer pipe serves as a thermal insulation function to prevent the fresh air pipe 100 from forming condensation due to the temperature difference between the indoor and outdoor environments. The plastic inner pipe has a thicker thickness to ensure that the fresh air pipe 100 has a certain strength, so that an effective inner diameter of the fresh air pipe 100 is small, and a fresh air intake volume is small.

Compared with the structure of the fresh air pipe 100 in the related art, in the present disclosure, by directly strengthening the structure of the thermal insulation pipe body 10, the plastic inner pipe can be eliminated (or a thickness of the plastic inner pipe can be reduced, see other embodiments). Thus, the fresh air pipe 100 can have a higher structural strength, and an inner diameter of the fresh air pipe 100 can be (significantly) increased under the condition that an outer diameter of the fresh air pipe 100 remains unchanged to increase the fresh air volume.

In a specific embodiment, the structure of the thermal insulation pipe body 10 can be enhanced in two ways. On one hand, through changing or improving the material of the thermal insulation pipe body 10, that is, the thermal insulation pipe body 10 is made of stronger temperature-insulation materials (such as mixed materials, etc.) so that the thermal insulation pipe body 10 has sufficient strength. On the other hand, a supporting structure is added to support the thermal insulation pipe body 10 to enhance the structural strength of the fresh air pipe 100. The above two improvements can be carried out separately or sim ultaneousl y.

Specially, the thermal insulation pipe body 10 is made of a thermal insulation material with a strength greater than 0.003 MPa (i.e., during the test, when the thermal insulation pipe body 10 with an outer diameter of 68 mm and an inner diameter of 60 mm is pressed with a force of 10N, the thermal insulation pipe body 10 will not be crushed). The fresh air pipe 100 further includes a supporting structure provided on a pipe wall of the thermal insulation pipe body 10 for supporting the thermal insulation pipe body 10. That is, the way to enhance the structure includes using a thermal insulation material with a strength greater than or equal to 0.003 MPa to make the thermal insulation pipe body 10 so that the thermal insulation pipe body 10 has sufficient strength.

As such, by using the thermal insulation material with a strength greater than or equal to 0.003 MPa to make the thermal insulation pipe body 10, the structural strength and wear resistance of the thermal insulation pipe body 10 can be enhanced, and the plastic inner pipe can be eliminated or the thickness of the plastic inner pipe can be reduced. Therefore, the fresh air pipe 100 can have a higher structural strength, and the inner diameter of the fresh air pipe 100 can be (significantly) increased under the condition that the outer diameter of the fresh air pipe 100 remains unchanged, so as to increase the fresh air volume.

Moreover, by adding a supporting structure for supporting the thermal insulation pipe body 10, the overall structural strength and wear resistance of the fresh air pipe 100 can be enhanced, thereby eliminating the plastic inner pipe or reducing the thickness of the plastic inner pipe. Thus, not only can the fresh air pipe 100 have a higher structural strength, but also the inner diameter of the fresh air pipe 100 can be (significantly) increased under the condition that the outer diameter of the fresh air pipe 100 remains unchanged, so as to increase the fresh air volume.

For the first way to enhance the structure above (that is to change or improve the material of the thermal insulation pipe body 10 so that the thermal insulation pipe body 10 has sufficient strength to eliminate the plastic inner pipe or reduce the thickness of the plastic inner pipe), what needs to be further explained is:
1. The fresh air pipe 100 can be composed of the thermal insulation pipe body 10 alone, so that the inner diameter of the fresh air pipe 100 can be (significantly) increased under the condition that the outer diameter of the fresh air pipe 100 remains unchanged, so as to increase the fresh air volume. Alternatively, a thinner inner protective cover 24 can be added to the inner wall surface of the thermal insulation pipe body 10, and/or, a thinner outer protective cover 25 can be added to the outer wall surface of the thermal insulation pipe body 10 to not only protect the thermal insulation pipe body 10 but also slightly reduce the requirements for performance of the material of the thermal insulation pipe body 10.
2. The wall thickness of the thermal insulation pipe body 10 can be less than or equal to 8 mm, so as to ensure that the inner diameter of the fresh air pipe 100 is increased. However, the wall thickness of the thermal insulation pipe body 10 should be greater than or equal to 3 mm, so that the fresh air pipe 100 has sufficient structural strength. For example, the wall thickness of the thermal insulation pipe body 10 can be 3.5 mm, 4 mm, 4.5 mm, 5 mm, 5.5 mm, 6 mm, 6.5 mm, 7 mm, 7.5 mm, etc, which can ensure that the inner diameter of the fresh air pipe 100 can be made larger (or even the largest) under the condition that the maximum outer diameter of the fresh air pipe 100 is constant. Therefore, it can ensure that the fresh air pipe 100 has good thermal insulation performance, to prevent condensation caused by the temperature difference between the inner wall surface and the outer wall surface of the fresh air pipe 100 and it can also ensure that the fresh air pipe 100 has sufficient structural strength to prevent damage during the installation process; and it can also enable the fresh air pipe 100 to have a larger fresh air intake volume.
3. The inner diameter of the thermal insulation pipe body 10 can be greater than or equal to 25 mm and less than or equal to 60 mm, and can be selected according to different users' requirements in specific applications.
4. The thermal insulation pipe body 10 can be made of a foam thermal insulation material, such as a polyethylene (PE) foam thermal insulation material.
5. The fresh air pipe 100 must not have obvious collapse and sharp corners.

The following mainly describes in detail the above second method of reinforcing structure (i.e., adding supporting structure).

Further, as shown in FIG. 2 to FIG. 16, the supporting structure includes a supporting framework 20. Specifically, the supporting framework 20 is provided on the thermal insulation pipe body 10 to support the thermal insulation pipe body 10. The supporting framework 20 is used to support the thermal insulation pipe body 10 and provide support and strength for the thermal insulation pipe body 10 to avoid deformation of the thermal insulation pipe. The structure is not limited to spiral structure, frame structure, etc.

As such, the supporting framework 20 supports the thermal insulation pipe body 10, which can effectively enhance the overall structural strength and wear resistance of the fresh air pipe 100 without increasing or slightly increasing the inner diameter of the fresh air pipe 100.

In a specific embodiment, the fresh air pipe 100 is usually a circular pipe, that is, the thermal insulation pipe body 10 is usually a circular pipe body, and the overall shape of the supporting framework 20 is compatible with the shape of the thermal insulation pipe body 10. It is not excluded that in some embodiments, the fresh air pipe 100 and the thermal insulation pipe body 10 are provided as square pipes or other polygonal pipes.

Further, the supporting framework 20 is at least partially provided in the pipe wall of the thermal insulation pipe body 10. In other words, the supporting framework 20 is at least partially embedded in the pipe wall of the thermal insulation pipe body 10.

As such, on one hand, it is convenient to limit and fix the supporting framework 20, and on the other hand, the structural strength of the thermal insulation pipe body 10 can be improved by the combination of the thermal insulation pipe body 10 and the supporting framework 20. Therefore, the overall structural strength of the fresh air pipe 100 can be improved, so that the wall thickness of the thermal insulation pipe body 10 can be reduced to increase the inner diameter of the reinforced fresh air pipe 100 to increase the fresh air volume.

In this embodiment, as shown in FIG. 2 to FIG. 10, the supporting framework 20 is completely provided in the pipe wall of the thermal insulation pipe body 10, that is, the supporting framework 20 is provided between an inner wall surface and an outer wall surface of the thermal insulation pipe body 10. In this way, the supporting framework 20 can be hidden.

The fresh air pipe 100 is composed of a thermal insulation pipe body 10 and a supporting framework 20 provided in the pipe wall of the thermal insulation pipe body 10. The thermal insulation pipe body 10 has thermal insulation and wear resistance properties, and the supporting framework 20 can improve the structural strength of the thermal insulation pipe body 10. The combination of the two can make the fresh air pipe 100 have a higher structural strength to prevent deformation or damage during installation and use; and can (significantly) increase the inner diameter of the fresh air pipe 100 under the condition that the outer diameter of the fresh air pipe 100 remains unchanged, so as to increase the fresh air volume and increase the utilization rate of the wall hole space; and can also prevent condensation.

In other embodiments, it is also possible that the supporting framework 20 protrudes from the inner wall surface of the thermal insulation pipe body 10 inside the thermal insulation pipe body 10. Alternatively, the supporting framework e 20 can also protrude from the outer wall surface of the heat preservation pipe body 10 outside the thermal insulation pipe body 10. Alternatively, the supporting framework 20 can be made to protrude from the inner wall surface of the thermal insulation pipe body 10 inside the thermal insulation pipe body 10. In addition, the supporting framework 20 can also be made to protrude from the outer wall surface of the thermal insulation pipe body 10 outside the thermal insulation pipe body 10.

In this embodiment, the thickness of the pipe wall of the thermal insulation pipe body is greater than or equal to 3 mm and less than or equal to 8 mm, such as 3.5 mm, 4 mm, 4.5 mm, 5 mm, 5.5 mm, 6 mm, 6.5 mm, 7 mm, 7.5 mm. It can be understood that if the thickness is too small, not only will the thermal insulation performance of the thermal insulation pipe body be poor, but also the structural strength of the thermal insulation pipe body will be low. If the thickness is too large, the inner diameter of the fresh air pipe 100 will be smaller and the fresh air volume will be less.

It can be ensured that the inner diameter of the fresh air pipe 100 can be made larger (or even the largest) when the maximum outer diameter of the fresh air pipe 100 is constant, which not only ensures that the fresh air pipe 100 has good thermal insulation performance, and prevents condensation caused by the temperature difference between the inner and outer walls of the fresh air pipe 100; and can also ensure that the fresh air pipe 100 has sufficient structural strength to prevent damage during the installation process; and can also enable the fresh air pipe 100 to have a larger fresh air intake volume.

Specially, the supporting framework 20 may be a metal part, a plastic part, or other structural parts with a certain strength, etc., as long as it can provide sufficient support for the thermal insulation pipe body 10.

Further, the thermal conductivity of the material of the thermal insulation pipe body 10 at room temperature is less than or equal to 0.12 W/(K·m), so that the thermal insulation pipe body 10 can have higher thermal insulation properties.

Further, the thermal insulation pipe body 10 is a foam thermal insulation pipe body 10, that is, the thermal insulation pipe body 10 is made of foam thermal insulation material, which has a low thermal conductivity and high thermal insulation properties. The thermal insulation pipe body 10 has certain elasticity and flexibility. Specifically, the thermal insulation pipe body 10 is made of polyethylene (PE) foam thermal insulation material, or polyurethane foam thermal insulation material, or phenolic foam thermal insulation material.

In other embodiments, the thermal insulation pipe body 10 is made of polystyrene board, or polystyrene foam thermal insulation material, or extruded polystyrene thermal insulation board, or ceramic fiber blanket, or aluminum silicate felt, or alumina, or silicon carbide fiber, or aerogel felt, or glass wool, or rock wool, or expanded perlite, or micro-nano heat insulation, or foamed cement.

Further, as shown in FIGs. 2, 3, 5, 6, 8 and 11-13, the fresh air pipe 100 further includes a fresh air connector 30, one end of the thermal insulation pipe body 10 is connected to the fresh air connector 30, and the fresh air connector 30 is used to connect with the fresh air interface 200 of the air conditioner 1000. In this way, the fresh air pipe 100 and the air conditioner 1000 can be easily connected. Specifically, the air outlet of the air outlet pipe of the thermal insulation pipe body 10 is connected to the fresh air connector 30.

It can be understood that the thermal insulation pipe body 10 generally has certain elasticity and flexibility, so that the thermal insulation pipe body 10 and the fresh air connector 30 can be connected by interference fitting.

Optionally, the thermal insulation pipe body 10 is connected to the fresh air connector 30 in a sealed manner to prevent air leakage. For example, the joint between the thermal insulation pipe body 10 and the fresh air connector 30 can be wrapped by tape, etc.

For the supporting framework 20 with a spiral structure, and the supporting framework 20 being provided on the outer wall surface or the inner wall surface of the thermal insulation pipe body 10 (see below), the spiral structure can be threaded with the fresh air connector 30 to realize the connection between the thermal insulation pipe body 10 and the fresh air connector 30 (it can be understood that if the supporting framework 20 is provided on the outer wall surface of the thermal insulation pipe body 10, the fresh air connector 30 has internal threads, and if the supporting framework 20 is provided on the inner wall surface of the thermal insulation pipe body 10, the fresh air connectors 30 have external threads).

Specially, the fresh air connector 30 can be detachably connected to the fresh air interface 200, for example, through a clamping structure or the like. For example, the outer peripheral surface of the fresh air connector 30 is provided with elastic buckles. When the fresh air connector 30 is inserted into the fresh air interface 200, the elastic buckle is clamped to a clamping position (such as a clamping protrusion or a clamping slot, etc.) outside the fresh air interface 200.

Furthermore, as shown in FIGs. 2 to 13, the fresh air pipe 100 further includes a anti-rodent member 40, and the anti-rodent member 40 is provided in the air inlet of the thermal insulation pipe body 10 or provided in the thermal insulation pipe body 10. In this embodiment, the anti-rodent member 40 is provided at the air inlet of the thermal insulation pipe body 10.

In this way, rats, insects, etc. can be prevented from entering the fresh air pipe 100.

Optionally, the anti-rodent member 40 can be an anti-rodent spring or anti-rodent net.

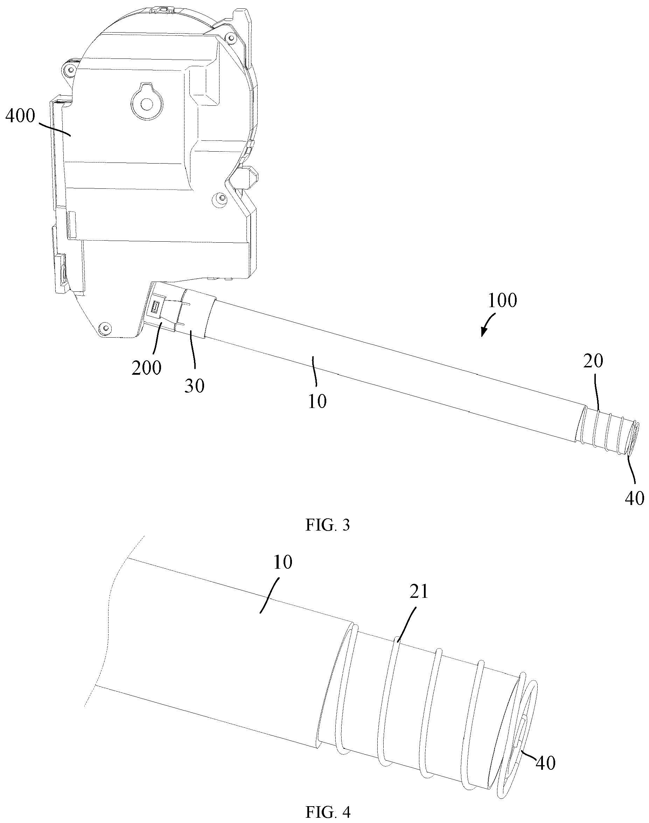

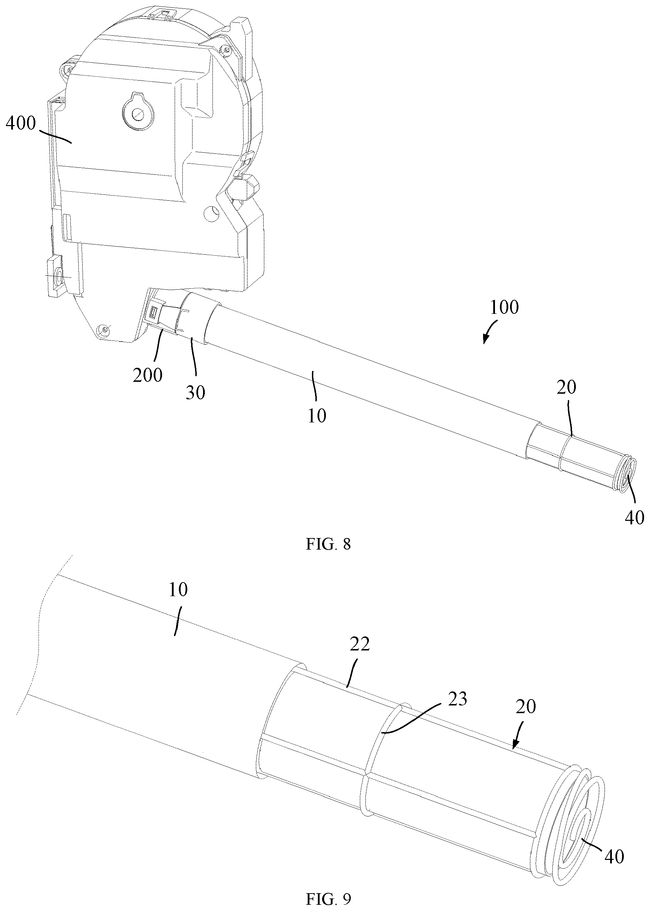

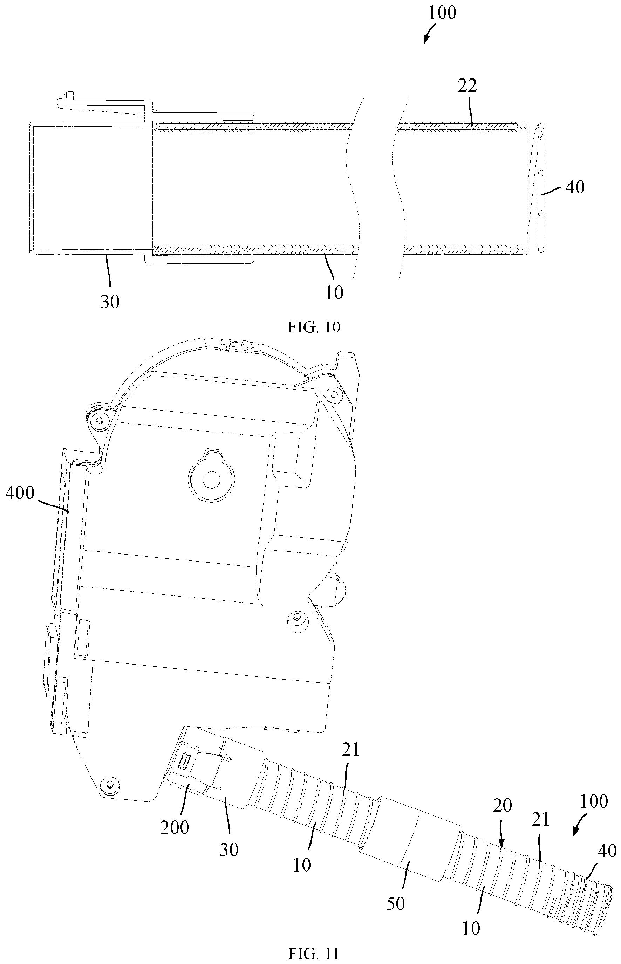

Further, as shown in FIGs. 4 and 9, the anti-rodent member 40 and the supporting framework 20 are integrally arranged, which can simplify the installation steps. In other embodiments, as shown in FIGs. 11 to 13, the anti-rodent member 40 and the supporting framework 20 may be assembled together, or the anti-rodent member 40 and the thermal insulation pipe body 10 may be assembled together.

In some embodiments, the fresh air pipe 100 can also be provided with multiple sections, and two adjacent sections of the fresh air pipe 100 can be connected by a connecting pipe body 50. Specifically, the connecting pipe body 50 has two interfaces for connecting two adjacent sections of fresh air pipe 100 respectively. For connection modes of the interfaces of the fresh air pipe 100 and the connecting pipe, please refer to the connection of the fresh air pipe 100 and the fresh air connector 30, and it is not necessary to repeat them here. In this way, the installation difficulty of the fresh air pipe 100 (installed outdoors) can be simplified, and the fresh air pipe 100 can be prevented from being damaged during the installation process; the number of sections of the fresh air pipe 100 can also be selected according to user requirements to improve installation flexibility.

In a specific embodiment, there are many structural forms of the supporting framework 20, which are described below with examples.

Further, as shown in FIGs. 2 to 7, the supporting framework 20 is a spiral structure. Specifically, the supporting framework 20 includes a spiral supporting rib 21 that spirally extends in a length direction of the thermal insulation pipe body 10. In this way, the structural strength of the fresh air pipe 100 can be improved, and the fresh air pipe 100 can be easily bent and installed.

Specially, the spiral supporting rib 21 is a steel wire structure or the like.

In this embodiment, as shown in FIGs. 2 to 7, the anti-rodent member 40 is an anti-rodent spring, and the anti-rodent spring is integrated with the supporting framework 20.

In another embodiment of the present disclosure, as shown in FIGs. 8 to 10, the supporting framework 20 is a supporting frame.

In this embodiment, as shown in FIGs. 8 to 10, the supporting frame includes a plurality of axial supporting ribs 22 extending in the length direction of the thermal insulation pipe body 10, and the plurality of axial supporting ribs 22 are spaced apart from each other in a circumferential direction of the thermal insulation pipe body 10.

In this embodiment, as shown in FIGs. 8 to 10, the supporting frame further includes circumferential connecting ribs 23, and the circumferential connecting ribs 23 connect a plurality of the axial supporting ribs 22.

In an embodiment, the circumferential connecting ribs 23 are annular ribs, and a plurality of the circumferential connecting ribs 23 are spaced apart from each other in the length direction of the thermal insulation pipe body 10.

In this embodiment, a cross-sectional shape of an axial supporting rib 22 can be a circle, a square, a triangle, a waist, an oval, etc., and/or a cross-sectional shape of the circumferential connecting rib 23 can be a circle, a square, a triangle, a waist, or an oval.

In this embodiment, an extension direction of the axial supporting rib 22 can be consistent with an extension direction of a center line of the thermal insulation pipe body 10, or the axial supporting rib 22 can also surround and extend along a circumferential direction of the thermal insulation pipe body 10.

In another embodiment of the present disclosure, the supporting framework 20 is a net-like structure or a grid-like structure.

In a specific embodiment, the supporting framework 20 can also be used to support the thermal insulation pipe body 10 in other ways or in combination with other structures, which will be described separately below.

For example, in another embodiment of the present disclosure, as shown in FIGs. 11 to 14, the supporting framework 20 is supporting on the outside of the thermal insulation pipe body 10. In this way, the supporting framework 20 can not only support the thermal insulation pipe body 10 but also protect the thermal insulation pipe body 10.

In this embodiment, further, the inner support surface of the supporting framework 20 and the outer wall surface of the thermal insulation pipe body 10 are in close contact with each other, so as to support the thermal insulation pipe body 10.

In this embodiment, the supporting framework 20 is fixedly connected to the outer wall surface of the thermal insulation pipe body 10. In this way, not only can the supporting framework 20 be restricted, but also the structural strength of the fresh air pipe 100 can be improved.

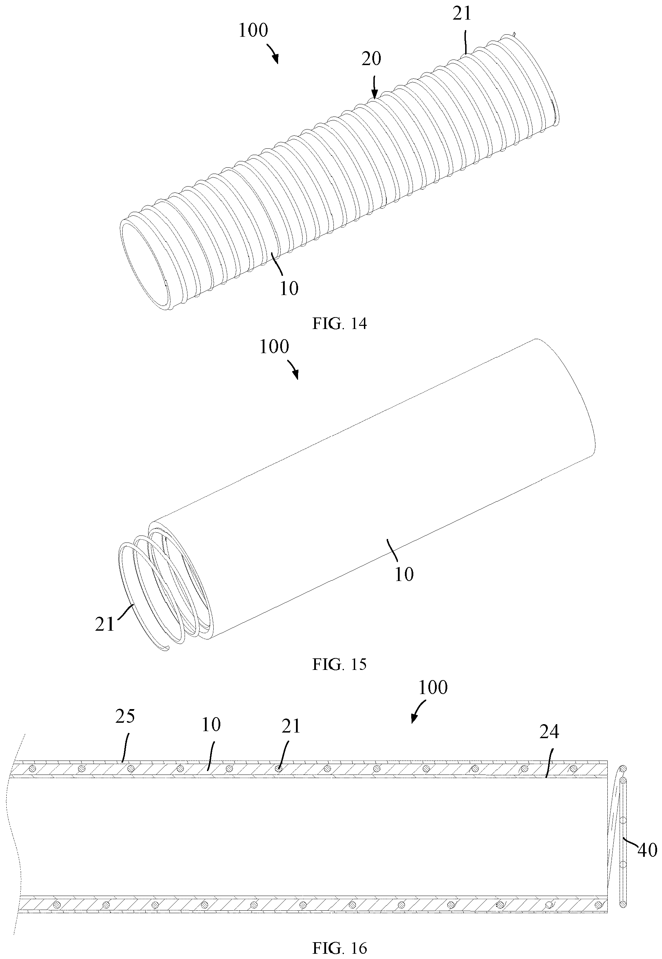

For another example, in a fifth embodiment of the present disclosure, as shown in FIG. 15, the supporting framework 20 is supporting on the inside of the thermal insulation pipe body 10.

In this embodiment, the outer support surface of the supporting framework 20 and the inner wall surface of the thermal insulation pipe body 10 are in close contact with each other, so as to support the thermal insulation pipe body 10.

In this embodiment, the supporting framework 20 is fixedly connected to the inner wall surface of the thermal insulation pipe body 10. In this way, not only can the supporting framework 20 be restricted, but also the structural strength of the fresh air pipe 100 can be improved.

For another example, in a sixth embodiment of the present disclosure, the supporting framework 20 includes an inner supporting frame and an outer supporting frame. The inner supporting frame is supporting on the inside of the thermal insulation pipe body 10, and the outer supporting frame is supporting on the outside of the thermal insulation pipe body 10.

In a specific design, on the basis of the above structure, the supporting structure can be further designed. In a seventh embodiment of the present disclosure, the supporting structure further includes an inner protective cover 24 provided on an inner side of the thermal insulation pipe body 10, and the inner protective cover 24 is provided on an inner side of the supporting framework 20. And/or, the supporting structure further includes an outer protective cover 25 provided on an outer side of the thermal insulation pipe body 10, and the outer protective cover 24 is provided on an outer side of the supporting framework 20.

In this embodiment, as shown in FIG. 16, the supporting structure further includes both the inner protective cover 24 and the outer protective cover 25. Both the inner protective cover 24 and the outer protective cover 25 are tubular structures.

In this embodiment, it can be understood that the thickness of the inner protective cover 24 and/or the thickness of the outer protective cover 25 is relatively thin (it can be understood that the plastic inner pipe in the related design is thinned to form a protective cover), which will not greatly reduce the inner diameter of the fresh air pipe 100.

The inner protective cover 24 can protect the inner wall surface of the thermal insulation pipe body 10, and the outer protective cover 25 can protect the outer wall surface of the thermal insulation pipe body 10. That is, the protective cover (the inner protective cover 24 and/or the outer protective cover 25) mainly protects the thermal insulation pipe body 10. In addition, the protective cover (the inner protective cover 24 and/or the outer protective cover 25) can also play a weaker supporting role for the thermal insulation pipe body 10 to further enhance the overall structural strength of the fresh air pipe 100.

In this embodiment, it can be understood that if the supporting framework 20 is provided in the pipe wall of the thermal insulation pipe body 10, the thermal insulation pipe body 10 and the supporting framework 20 therein are sandwiched between the inner protective cover 24 and the outer protective cover 25. If the supporting framework 20 is supporting on the inner side of the thermal insulation pipe body 10, the supporting framework 20 is provided between the inner protective cover 24 and the thermal insulation pipe body 10. If the supporting framework 20 is supporting on the outer side of the thermal insulation pipe body 10, the supporting framework 20 is provided between the outer protective cover 25 and the thermal insulation pipe body 10.

In this embodiment, further, the inner protective cover 24 may be corrugated tubular; and/or the outer protective cover 25 may be corrugated tubular.

In this embodiment, specifically, both the inner protective cover 24 and the outer protective cover 25 are corrugated tubular, thereby improving the bendability of the fresh air pipe 100.

In this embodiment, specifically, the supporting framework 20 has a spiral structure, that is, the supporting framework 20 includes spiral supporting ribs 21 that spirally extend along the length direction of the thermal insulation pipe body 10.

In this embodiment, further, the spiral supporting ribs 21 are correspondingly provided at wave troughs of the inner protective cover 24, and/or the spiral supporting ribs 21 are correspondingly provided at wave troughs of the outer protective cover 25.

In this embodiment, specifically, the spiral supporting ribs 21 are correspondingly provided at the wave troughs of the inner protective cover 24 and correspondingly provided at the wave troughs of the outer protective cover 25. In this way, the structures of the various parts of the fresh air pipe 100 are more coordinated.

In this embodiment, further, the inner protective cover 24 is a plastic part, and/or the outer protective cover 25 is a plastic part. Specifically, the inner protective cover 24 is PVC (i.e., polyvinyl chloride plastic) leather or TPU (i.e., thermoplastic polyurethane rubber) leather, etc., and/or, the outer protective cover 25 is PVC (i.e. polyvinyl chloride plastic) leather or TPU (i.e. thermoplastic polyurethane rubber) leather or the like.

In this embodiment, specifically, the thickness of the inner protective cover 24 is less than or equal to 5 mm; and/or the thickness of the outer protective cover 25 is less than or equal to 5 mm. In this way, it can be avoided that the inner protective cover 24 and/or the outer protective cover 25 have a greater influence on the inner diameter of the fresh air pipe 100.

In this embodiment, specifically, the thickness of the inner protective cover 24 is greater than or equal to 0.5 mm; and/or the thickness of the outer protective cover 25 is greater than or equal to 0.5 mm.

In this embodiment, the thickness of the inner protective cover 24 is greater than or equal to 1 mm and less than or equal to 2 mm, such as 1.1 mm, 1.2 mm, 1.3 mm, 1.4 mm, 1.5 mm, 1.6 mm, 1.7 mm, 1.8 mm, or 1.9 mm, etc. Of course, optionally, 0.6 mm, 0.8 mm, 09 mm, 2.5 mm, 3 mm, 3.5 mm, 4 mm, 4.5 mm, or 2.7 mm, etc. can also be taken.

In this embodiment, the thickness of the outer protective cover 25 is greater than or equal to 1 mm and less than or equal to 2 mm, such as 1.1 mm, 1.2 mm, 1.3 mm, 1.4 mm, 1.5 mm, 1.6 mm, 1.7 mm, 1.8 mm, or 1.9 mm, etc. Of course, optionally, 0.6 mm, 0.8 mm, 09 mm, 2.5 mm, 3 mm, 3.5 mm, 4 mm, 4.5 mm, or 2.7 mm, etc. can also be taken.

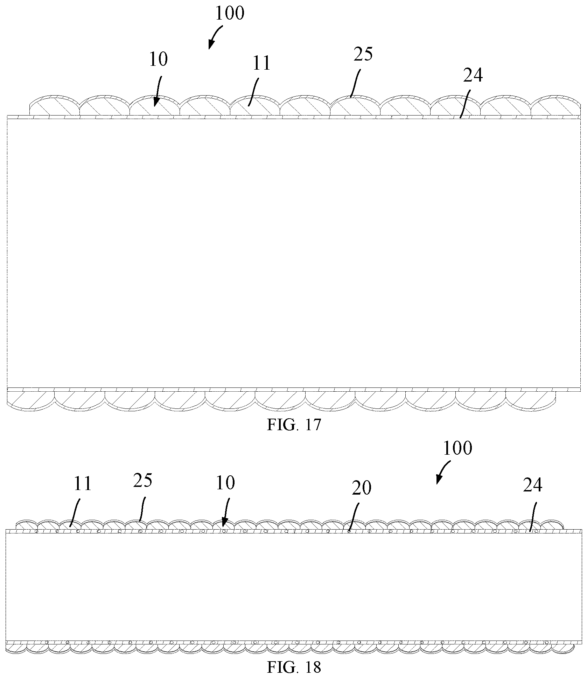

In other embodiments, the supporting structure can also be provided to other structural forms. In an eighth embodiment of the present disclosure, as shown in FIG. 17, the supporting structure includes an inner protective cover 24 provided on the inner side of the thermal insulation pipe body; and/or, the supporting structure includes an outer protective cover 25 provided on the outer side of the thermal insulation pipe body. In this embodiment, the various settings of the inner protective cover 24 and/or the outer protective cover 25 can refer to the seventh embodiment, and it is not necessary to repeat them here.

In ninth to eighteenth embodiments of the present disclosure, the supporting structure includes a supporting framework 20, an inner protective cover 24 and/or an outer protective cover 25, the supporting framework 20 is provided based on the inner protective cover 24 or the outer protective cover 25, which will be described separately below.

In ninth to twelfth embodiments of the present disclosure, as shown in FIGs. 18 to 22, the supporting structure includes a supporting framework 20 and an inner protective cover 24, the inner protective cover 24 is provided on the inner side of the thermal insulation pipe body 10, and the supporting framework 20 is at least partially provided in a cover of the inner protective cover 24. The implementation manner of the supporting framework 20 being at least partially provided in a cover of the inner protective cover 24 may refer to the implementation manner of "the supporting framework 20 is at least partially disposed in the pipe wall of the thermal insulation pipe body 10" in the above embodiment, which is not repeated here.

The supporting framework 20 is at least partially provided in a cover of the inner protective cover 24 to enhance the structural strength of the inner protective cover 24, jointly support the thermal insulation pipe body 10 and improve the structural strength of the fresh air pipe 100.

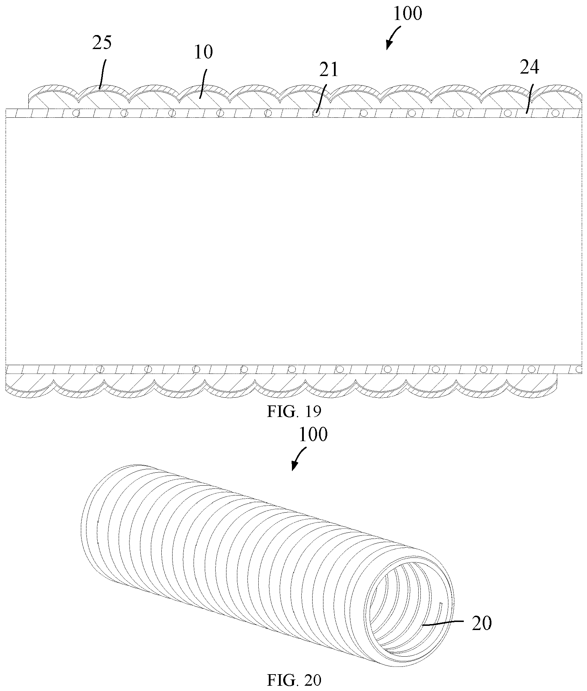

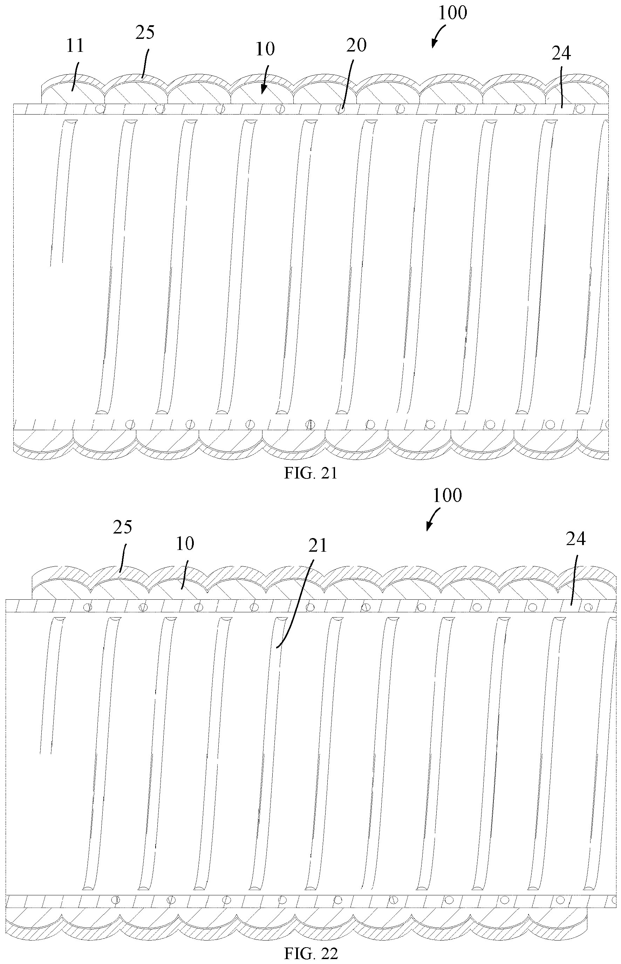

In the ninth and tenth embodiments of the present disclosure, as shown in FIG. 18 and FIG. 19, the supporting structure is completely provided in a cover of the inner protective cover 24. In an eleventh and twelfth embodiments of the present disclosure, as shown in FIG. 21 and FIG. 22, the supporting structure is partially provided in a cover of the inner protective cover 24 and protrudes from the inner wall surface of the inner protective cover 24 on the inner side the inner protective cover 24.

In the ninth to twelfth embodiments of the present disclosure, as shown in FIGs. 18-22, the supporting structure further includes an outer protective cover 25 provided on the outside of the thermal insulation pipe body 10.

In the ninth to twelfth embodiments of the present disclosure, the other features of the inner protective cover 24 and the outer protective cover 25 can refer to the seventh embodiment of the present disclosure, which is not repeated here.

In the thirteenth embodiment of the present disclosure, the supporting structure includes a supporting framework 20 and an inner protective cover 24 provided on the inner side of the thermal insulation pipe body 10, and the supporting framework 20 is provided on the inner side of the inner protective cover 24. In this embodiment, the supporting structure further includes an outer protective cover 25 provided on the outer side of the thermal insulation pipe body 10.

In the fourteenth to seventeenth embodiments of the present disclosure, the supporting structure further includes an outer protective cover 25 provided on the outer side of the thermal insulation pipe body 10, and the supporting framework 20 is at least partially provided in the outer protective cover 25. The implementation manner of the supporting framework 20 being at least partially provided in the outer protective cover 25 may refer to the implementation manner of "the supporting framework 20 is at least partially disposed in the pipe wall of the thermal insulation pipe body 10" in the above embodiment, which is not repeated here.

The supporting framework 20 is at least partially provided in the outer protective cover 25 to enhance the structural strength of the outer protective cover 25, jointly support the thermal insulation pipe body 10 and improve the structural strength of the fresh air pipe 100.

In the fourteenth and fifteenth embodiments of the present disclosure, the supporting structure is completely provided in the outer protective cover 25. In the sixteenth and seventeenth embodiments of the present disclosure, the supporting structure is partially provided in the outer protective cover 25, and protrudes from the outer wall surface of the outer protective cover 25 on the outer side of the outer protective cover 25.

In the fourteenth and fifteenth embodiments of the present disclosure, the supporting structure further includes an inner protective cover 24 provided on the inner side of the thermal insulation pipe body 10.

In the fourteenth to seventeenth embodiments of the present disclosure, the other features of the inner protective cover 24 and the outer protective cover 25 can refer to the seventh embodiment of the present disclosure, which is not repeated here.

In the eighteenth embodiment of the present disclosure, the supporting structure includes a supporting framework 20 and an outer protective cover 25. The outer protective cover 25 is provided on the inner side of the thermal insulation pipe body 10, and the supporting framework 20 is provided on the inner side of the outer protective cover 25. In this embodiment, optionally, the supporting structure further includes an inner protective cover 24 provided on the inner side of the thermal insulation pipe body 10.

It should be noted that in the seventh to eighteenth embodiments of the present disclosure, the supporting structure includes the inner protective cover and the outer protective cover, the thermal insulation pipe body 10 is an integrated pipe body extending in the length direction of the thermal insulation pipe body 10, or the thermal insulation pipe body 10 includes a plurality of sub-pipe bodies 11 sequentially provided in the length direction of the thermal insulation pipe body 10. For example, in the eighth, ninth, eleventh, fourteenth, and sixteenth embodiments of the present disclosure, as shown in FIGs. 17, 18 and 21, the thermal insulation pipe body 10 includes a plurality of sub-pipe bodies 11 sequentially provided in the length direction of the thermal insulation pipe body 10, and the plurality of sub-pipe bodies 11 are next to each other. In the tenth, twelfth, fifteenth, and seventeenth embodiments of the present disclosure, as shown in FIG. 19 and FIG. 22, the thermal insulation pipe body 10 is an integrated pipe body extending along the length direction of the thermal insulation pipe body 10.

For another example, in the nineteenth embodiment of the present disclosure, the supporting structure includes multiple supporting plates that cross each other (such as two supporting plates that cross each other). The supporting plate extends along the length direction of the thermal insulation pipe body 10. The supporting structure is provided in the thermal insulation pipe body 10, and both long side edges of each supporting plate abut against/connect to the inner wall surface of the thermal insulation pipe body 10.

In addition, it should be pointed out that, in order to make the fresh air pipe 100 have better performance, the fresh air pipe 100 can also satisfy at least one of the following characteristics:
1) The wall surface of the fresh air pipe 100 is smooth, and if it is a corrugated pipe, the thread is uniform.
2) When the fresh air pipe 100 is bent 180 degrees, a bending radius is 1.5 to 2.5 times of the pipe diameter.
3) The wall surface of the fresh air pipe 100 should be a circular arc section, and there should be no obvious collapse and sharp corners.
4) The fresh air pipe 100 is filled with air at a pressure of 0.3Mpa and kept for 2 minutes without damage or leakage.

It should be pointed out that the technical solutions between the above various embodiments can be combined with each other, but they must be based on the realization by those of ordinary skill in the art. When the combination of technical solutions is contradictory or cannot be realized, it should be considered that such a combination of technical solutions does not exist, and is not within the scope of the present disclosure.

The present disclosure further provides a fresh air module including a fresh air duct, the fresh air module includes the fresh air pipe as described above, and the fresh air pipe is installed at the air inlet of the fresh air duct.

Specifically, the fresh air module includes a fresh air interface provided at the air inlet of the fresh air duct, and the fresh air pipe is connected to the fresh air interface.

Optionally, the fresh air module includes a fresh air housing with a fresh air duct, and a fresh air wheel provided in the fresh air duct, and the fresh air interface is provided on the fresh air housing.

The above are only some embodiments of the present disclosure, and do not limit the scope of the present disclosure thereto. Under the inventive concept of the present disclosure, equivalent structural transformations made according to the description and drawings of the present disclosure, or direct/indirect application in other related technical fields are included in the scope of the present disclosure.

## Claims

1. A fresh air pipe (100) for an air conditioner (1000), the fresh air pipe (100) comprising a thermal insulation pipe body (10), wherein a structure of the thermal insulation pipe body (10) is reinforced.

2. The fresh air pipe (100) according to claim 1, further comprising a supporting structure, the supporting structure is provided on a pipe wall of the thermal insulation pipe body (10) for supporting the thermal insulation pipe body (10).

3. The fresh air pipe (100) according to claim 2, wherein the supporting structure includes a supporting framework (20);, wherein the supporting framework (20) preferably is at least partially provided in the pipe wall of the thermal insulation pipe body (10);

4. The fresh air pipe (100) according to claim 3, wherein the supporting framework (20) is provided between an inner wall surface and an outer wall surface of the thermal insulation pipe body (10); or
the supporting framework (20) protrudes from an inner wall surface of the thermal insulation pipe body (10) on an inner side of the thermal insulation pipe body (10); or
the supporting framework (20) protrudes from an outer wall surface of the thermal insulation pipe body (10) on an outer side of the thermal insulation pipe body (10), wherein a thickness of the pipe wall of the thermal insulation pipe body (10) preferably is greater than or equal to 3 mm, and less than or equal to 8 mm.

5. The fresh air pipe (100) according to claim 3 or 4, wherein the supporting framework (20) is supporting on the inner side of the thermal insulation pipe body (10), or the supporting framework (20) is supporting on the outer side of the thermal insulation pipe body (10); wherein the supporting framework (20) is preferably fixedly connected to the inner wall surface of the thermal insulation pipe body (10), or the supporting framework (20) preferably is fixedly connected to the outer wall surface of the thermal insulation pipe body (10).

6. The fresh air pipe (100) according to any one of claims 3 to 5, wherein the supporting structure further includes an inner protective cover (24) provided on the inner side of the thermal insulation pipe body (10), and the supporting framework (20) is supporting on an inner side of the inner protective cover (24), or the supporting framework (20) is at least partially provided in a cover of the inner protective cover (24), wherein the supporting structure further preferably includes an outer protective cover (25) provided on the outer side of the thermal insulation pipe body (10); and/or
wherein the supporting structure further includes an outer protective cover (25) provided on the outer side of the thermal insulation pipe body (10), and the supporting framework (20) is supporting on an outer side of the outer protective cover (25), or the supporting framework (20) is at least partially provided in a cover of the outer protective cover (25), wherein the supporting structure further preferably includes an inner protective cover (24) provided on the inner side of the thermal insulation pipe body (10).

7. The fresh air pipe (100) according to any one of claims 1 to 6, wherein the thermal insulation pipe body (10) is an integrated pipe body extending along a length direction of the thermal insulation pipe body (10); or
the thermal insulation pipe body (10) includes a plurality of sub-pipe bodies (11), the plurality of sub-pipe bodies (11) are sequentially provided in a length direction of the thermal insulation pipe body (10).

8. The fresh air pipe (100) according to any one of claims 3 to 5, wherein the supporting structure further includes an inner protective cover (24) provided on the inner side of the thermal insulation pipe body (10), and the inner protective cover (24) is provided on an inner side of the supporting framework (20); and/or
the supporting framework (20) further includes an outer protective cover (25) provided on the outer side of the thermal insulation pipe body (10), and the outer protective cover (25) is provided on an outer side of the supporting framework (20).

9. The fresh air pipe (100) according to any one of claims 6 to 8, wherein the inner protective cover (24) is corrugated tubular; and/or
the outer protective cover (25) is corrugated tubular, and/or wherein the inner protective cover (24) is a plastic member; and/or
the outer protective cover (25) is a plastic member, and/or wherein the inner protective cover (24) includes a PVC cover or a TPU cover; and/or
the outer protective cover (25) includes a PVC cover or a TPU cover, and/or wherein a thickness of the inner protective cover (24) is less than or equal to 5 mm; and/or
a thickness of the outer protective cover (25) is less than or equal to 5 mm.

10. The fresh air pipe (100) according to any one of claims 3 to 9, wherein the supporting framework (20) is a supporting frame;
wherein the supporting frame preferably includes a plurality of axial supporting ribs (22) extending in a length direction of the thermal insulation pipe body (10), the plurality of axial supporting ribs (22) preferably are spaced apart from each other in a circumferential direction of the thermal insulation pipe body (10), wherein the supporting frame further preferably includes a circumferential connecting rib (23) connected to the plurality of the axial supporting ribs (22); and/or
, wherein the supporting framework (20) is of a net-like structure or a grid-like structure, and/or wherein the supporting frame includes spiral supporting ribs (21) spirally extending in a length direction of the thermal insulation pipe body (10); and/or
, wherein the supporting framework (20) is a plastic member or a metal member; and/or
the fresh air pipe (100) further includes a fresh air connector (30), an end of the thermal insulation pipe body (10) is connected to the fresh air connector (30), the fresh air connector (30) is configured to connect with a fresh air interface (200) of the air conditioner (1000); and/or
the fresh air pipe (100) is provided with multiple sections, two adjacent sections of fresh air pipe (100) are connected through a connecting pipe body (50).

11. The fresh air pipe (100) according to any one of claims 2 to 5, wherein the supporting structure includes:
an inner protective cover (24) provided on the inner side of the thermal insulation pipe body (10); and/or
an outer protective cover (25) provided on the outer side of the thermal insulation pipe body (10).

12. The fresh air pipe (100) according to any one of claims 1 to 11, wherein the thermal insulation pipe body (10) is made of a thermal insulation material with a strength greater than 0.003 MPa; and/or
wherein the fresh air pipe (100) further includes an anti-rodent member (40) provided in an air inlet of the thermal insulation pipe body (10) or provided in the thermal insulation pipe body (10), wherein the anti-rodent member (40) preferably is an anti-rodent spring or an anti-rodent net; and/or
the anti-rodent member (40) preferably is integrated with the supporting framework (20) of the supporting structure.

13. The fresh air pipe (100) according to any one of claims 1 to 12, wherein the thermal insulation pipe body (10) is made of a polyethylene foam thermal insulation material, or a polyurethane foam thermal insulation material, or a phenolic foam thermal insulation material, or a polystyrene board, or a polystyrene foam thermal insulation material, or an extruded polystyrene thermal insulation board, or a ceramic fiber blanket, or an aluminum silicate felt, or an alumina, or a silicon carbide fiber, or an aerogel felt, or a glass wool, or a rock wool, or an expanded perlite, or a micro-nano heat insulation, or a foamed cement.

14. A fresh air module (400), comprising a fresh air pipe (100) according to any one of claims 1 to 13.

15. An air conditioner (1000), comprising a fresh air pipe (100) according to any one of claims 1 to 13; or comprising a fresh air module (400) according to claim 14.
